(19) Europäisches Patentamt
European Patent Office
Office européen des brevets

(11) EP 4 437 075 B1

(12) **EUROPEAN PATENT SPECIFICATION**

(45) Date of publication and mention of the grant of the patent:
**24.09.2025 Bulletin 2025/39**

(21) Application number: **22817880.2**

(22) Date of filing: **10.11.2022**

(51) International Patent Classification (IPC):
***C11D 3/37*** *(2006.01)* ***C08F 126/02*** *(2006.01)*
***C11D 3/386*** *(2006.01)* ***C11D 11/00*** *(2006.01)*
***C11D 1/02*** *(2006.01)*

(52) Cooperative Patent Classification (CPC):
**C11D 3/3769; C08G 73/024; C08G 73/028; C11D 1/02; C11D 3/38618; C11D 3/38627;**
C11D 2111/12

(86) International application number:
**PCT/EP2022/081388**

(87) International publication number:
**WO 2023/088761 (25.05.2023 Gazette 2023/21)**

(54) **COMPOSITIONS COMPRISING POLYMERS AND THEIR USE**

ZUSAMMENSETZUNGEN MIT POLYMEREN UND DEREN VERWENDUNG

COMPOSITIONS COMPRENANT DES POLYMÈRES ET LEUR UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.11.2021 EP 21209593**

(43) Date of publication of application:
**02.10.2024 Bulletin 2024/40**

(73) Proprietor: **BASF SE**
**67056 Ludwigshafen am Rhein (DE)**

(72) Inventors:
- **WILLERSINN, Jochen Eckhard**
  **67056 Ludwigshafen (DE)**
- **ROTHER-NOEDING, Helen**
  **67056 Ludwigshafen (DE)**
- **WITTELER, Helmut**
  **67056 Ludwigshafen (DE)**
- **DE, Swati**
  **67056 Ludwigshafen (DE)**
- **HUEFFER, Stephan**
  **67056 Ludwigshafen (DE)**
- **WOHLMUTH, Catharina**
  **67056 Ludwigshafen (DE)**

(74) Representative: **BASF IP Association**
**BASF SE**
**GBI - Z078**
**67056 Ludwigshafen (DE)**

(56) References cited:
**EP-A1- 0 087 671** **WO-A2-02/31025**
**US-A- 5 457 176** **US-A- 5 470 510**

- **TAMER YASEMIN ET AL: "Lysine-derived, pH-sensitive and biodegradable poly(beta-aminoester urethane) networks and their local drug delivery behaviour", vol. 14, no. 7, 19 January 2018 (2018-01-19), GB, pages 1195 - 1209, XP055912706, ISSN: 1744-683X, Retrieved from the Internet <URL:https://pubs.rsc.org/en/content/articlepdf/2018/sm/c7sm01886j> DOI: 10.1039/C7SM01886J**
- **AKYOL ECE ET AL: "Phosphonate-functionalized poly([beta]-amino ester) macromers as potential biomaterials", vol. 106, no. 5, 5 February 2018 (2018-02-05), US, pages 1390 - 1399, XP055912739, ISSN: 1549-3296, Retrieved from the Internet <URL:https://api.wiley.com/onlinelibrary/tdm/v1/articles/10.1002%2Fjbm.a.36339> DOI: 10.1002/jbm.a.36339**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 437 075 B1

- BREY DARREN M. ET AL: "Influence of macromer molecular weight and chemistry on poly([beta]-amino ester) network properties and initial cell interactions", JOURNAL OF BIOMEDICAL MATERIALS RESEARCH PART A, vol. 85A, no. 3, 1 January 2008 (2008-01-01), US, pages 731 - 741, XP055912774, ISSN: 1549-3296, DOI: 10.1002/jbm.a.31494

## Description

The present invention is directed towards a detergent composition or composition for hard surface cleaning comprising

(A) at least one polymer with an average molecular weight $M_w$ of at least 1,500 g/mol comprising, as repeating units, structural units according to general formula (I)

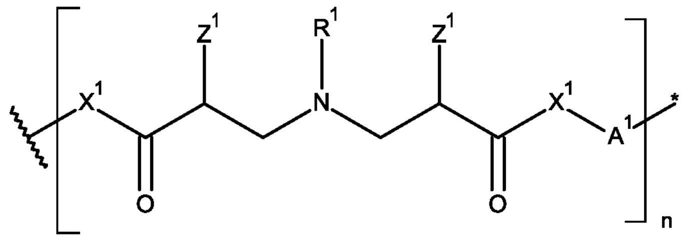

(I)

wherein

$Z^1$ are same or different and selected from hydrogen and methyl,
$R^1$ are same or different and selected from $C_2$-$C_4$-alkyl, non-substituted or substituted with hydroxy or $-NR^{2a}R^{2b}$,
$R^{2a}$ and $R^{2b}$ are same or different and selected from $C_1$-$C_4$-alkyl, or $NR^{2a}R^{2b}$ together form a $C_5$-$C_6$-cycloalkylenamino or a 1-imidazole group,
n is selected from 3 to 100,
$X^1$ is selected from O and N-$R^3$, with $R^3$ being selected from hydrogen and methyl,
$A^1$ are same or different and selected from $C_2$-$C_6$-alkylene and $(AO)_{y1}$, with AO being selected from ethylene oxide and propylene oxide and combinations thereof, and y1 being from 2 to 200, and

(B) at least one anionic surfactant.

Furthermore, the present disclosure describes polymers (A) and a process to make such polymers (A).

Laundry detergents have to fulfil several requirements. They need to remove all sorts of soiling from laundry, for example all sorts of pigments, clay, fatty soil, and dyestuffs including dyestuff from food and drinks such as red wine, tea, coffee, and fruit including berry juices. Laundry detergents also need to exhibit a certain storage stability. Especially laundry detergents that are liquid or that contain hygroscopic ingredients often lack a good storage stability, e.g. enzymes tend to be deactivated.

Fatty soilings are still a challenge in laundering. Although numerous suggestions for removal have been made - polymers, enzymes, surfactants - solutions that work well are still of interest. It has been suggested to use a lipase to support fat removal but many builders - especially in liquid laundry detergents - do not work well with lipase.

In addition, greying of laundry is still a significant problem. The greying is assigned to re-deposition of soil during washing. In order to reduce redeposition of soil, specific native or modified polysaccharides such as polysaccharides treated with gaseous or liquid $SO_2$ have been developed. Numerous ingredients have been suggested with various structures, see, e.g., WO 2015/091160, EP 3 266 858 A1 and EP 3 226 858 A1, but still leave room for improvement, and the anti-greying performance of such compounds is still not sufficient. Therefore, there is a continuous need for improved anti-greying agents which can be used in a laundry process. In particular, it is desirable to provide an anti-greying agent which reduces greying of a washed fabric. US 5470510 A discloses detergents compositions containing L-glutamic acid homopolymer or glutamic acid-polyethylene glycol block copolymer as soil-suspension and anti-redeposition agents.

It was therefore an objective to provide a detergent composition that fulfils the requirements discussed above. It was further an objective to provide ingredients that fulfil the above requirements, and it was an objective to provide a process to make such ingredients and detergent compositions.

Accordingly, the compositions defined at the outset have been found, hereinafter also referred to as inventive compositions or compositions according to the present invention. Inventive compositions contain at least on polymer (A) with an average molecular weight $M_w$ of at least 1,500 g/mol that comprises certain repeating units:

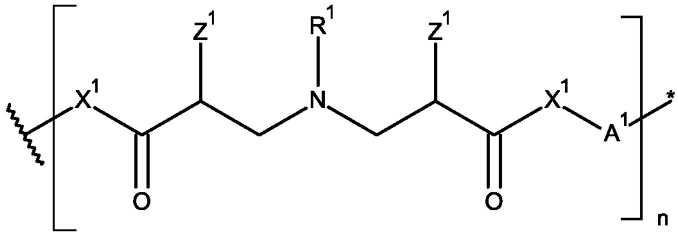

(I)

wherein

$Z^1$ are different or preferably same and selected from hydrogen and methyl, preferably all $Z^1$ are the same and hydrogen.
$R^1$ are same or different and selected from $C_2$-$C_4$-alkyl, for example methyl, ethyl, n-propyl, isopropyl, n-butyl, isobutyl, sec.-butyl, or tert.-butyl, preferably $CH_3$ or $C_2H_5$, non-substituted or substituted with hydroxy or -$NR^{2a}R^{2b}$,
$R^{2a}$ and $R^{2b}$ are different or preferably same and selected from $C_1$-$C_4$-alkyl, $C_1$-$C_4$-alkyl being defined as above, or $NR^{2a}R^{2b}$ together form a $C_5$-$C_6$-cycloalkylenamino or 1-imidazole group. Preferred examples of -$NR^{2a}R^{2b}$ are -$N(CH_3)_2$, -$N(C_2H_5)_2$, -$N(CH_2)_4$, and -$N(CH_2)_5$.

The variable n is selected from 3 to 100, preferably 3 to 45.
The repeating units are connected to each other through the asterisk * that symbolizes the link to another repeating unit or to an end capping group, e.g., according to general formula (II).
$X^1$ is selected from O and N-$R^3$, with $R^3$ being selected from hydrogen and methyl, preferably all $X^1$ are oxygen, $A^1$ are same or different and selected from $C_2$-$C_6$-alkylene such as -$(CH_2)_2$-, -$(CH_2)_3$-, -$(CH_2)_4$-, -$(CH_2)_5$-, -$(CH_2)_6$-, and preferably from $(AO)_{y1}$, with AO being selected from ethylene oxide ("EO") and propylene oxide ("PO") and combinations thereof, and y1 being from 2 to 200, preferably 2 to 10.
In embodiments wherein $(AO)_{y1}$ refers to combinations from EO and PO, such EO and PO may be arranged randomly or preferably block-wise, in two or three blocks. In preferred embodiments wherein $(AO)_{y1}$ refers to combinations from EO and PO, at least 50 mol-% of AO are EO, for example 50 to 90 mole-%, more preferably 65 to 90 mol-%.
Even more preferably, all AO in $(AO)_{y1}$ and thus in $A^1$ are EO.
According to the present invention, the average molecular weight $M_w$ of polymer (A) is at least 1,500 g/mol, preferably in the range of from 2,500 to 100,000 g/mol. The average molecular weight may be determined by gel permeation chromatography ("GPC"), in 0.1 M aqueous NaCl solution containing 0.1 % by weight trifluoric acid as mobile phase, or in hexafluoroisopropanol ("HFIP"), each time preferably with TSKgel as stationary phase.
In one embodiment of the present invention, the polydispersity $Q = M_w/M_n$ of polymer (A) is in the range of from 2 to 10, preferably 2.5 to 6.
In one embodiment of the present invention, polymer (A) has a Hazen colour number in the range of from 20 to 500, determined in a 10 % by weight aqueous solution.
In one embodiment of the present invention, polymer (A) has an OH value, measured according to DIN 53240 (2013), in the range of from 1 to 1000, preferably 5 to 350 mg KOH/g polymer (A).
In one embodiment of the present invention, polymer (A) additionally bears one or more groups of general formula (II)

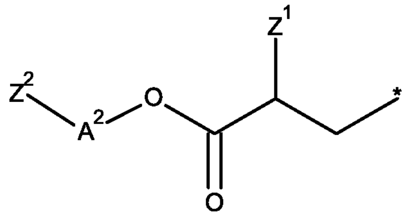

(II)

per molecule, preferably up to two per molecule.
In formula (II), $A^2$ is selected from $(AO)_{y2}$, with AO being selected from ethylene oxide and propylene oxide and combinations thereof, and y2 being from 2 to 200, preferably 2 to 45,

and $Z^2$ is selected from

hydrogen,

$C_1$-$C_{10}$-alkyl groups, for example methyl, ethyl, n-propyl, isopropyl, n-butyl, isobutyl, sec.-butyl, tert.-butyl, n-pentyl, iso-amyl, n-hexyl,, isohexyl, n-heptyl, isoheptyl, n-octyl, n-nonyl, or n-decyl, preferably $CH_3$ or $C_2H_5$

the carboxylate of an aliphatic $C_2$-$C_{20}$-alkyl fatty acid, for example capric acid, lauric acid, myristic acid, palmitic acid, stearic acid or arachidic acid; or of a $C_{10}$-$C_{20}$-alkenyl fatty acid, for example oleic acid, palmitoleic acid, linoleic acid, linoelaidic acid, and $\alpha$-linolenic acid, preferred are oleic acid, lauric acid, palmitic acid and stearic acid.

$A^2$ are same or different and selected from $(AO)_{y2}$, with AO being selected from ethylene oxide ("EO") and propylene oxide ("PO") and combinations thereof, and y2 being from 2 to 200, preferably from 2 to 45.

In embodiments wherein $(AO)_{y2}$ refers to combinations from EO and PO, such EO and PO may be arranged randomly or preferably block-wise, in two or three blocks. In preferred embodiments wherein $(AO)_{y2}$ refers to combinations from EO and PO, at least 50 mol-% of AO are EO, for example 50 to 90 mole-%, more preferably 65 to 90 mol-%.

Even more preferably, all AO in $(AO)_{y2}$ and thus in $A^2$ are EO.

Preferably, $A^1$ and $A^2$ are identical.

In formula (II), the asterisk denotes the part that is linked to an N-atom of polymer (A).

In one embodiment of the present invention, polymer (A) bears at least one group of general formula (III) per molecule

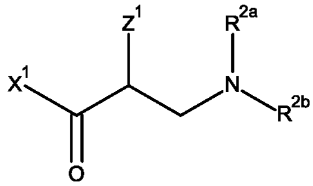

**(III)**

$R^{2a}$ and $R^{2b}$ are different or preferably same and selected from $C_1$-$C_4$-alkyl, $C_1$-$C_4$-alkyl being defined as above, or $NR^{2a}R^{2b}$ together form a $C_5$-$C_6$-cycloalkylenamino or 1-imidazole group. Preferred examples of $-NR^{2a}R^{2b}$ are 1-imidazole, $-N(CH_3)_2$, $-N(C_2H_5)_2$, $-N(CH_2)_4$, and $-N(CH_2)_5$.

The other variables are defined as above.

In one embodiment of the present invention, polymer (A) bears one or two groups of general formula (III) per molecule. Groups according to general formula (III) are linked through $Z^1$ to the rest of polymer (A).

Inventive formulations may contain 0.1 to 10 % by weight of polymer (A).

Inventive compositions comprise

(B) at least one anionic surfactant, hereinafter also being referred to as anionic surfactant (B).

Examples of anionic surfactants (B) are alkali metal and ammonium salts of $C_8$-$C_{18}$-alkyl sulfates, of $C_8$-$C_{18}$-fatty alcohol polyether sulfates, of sulfuric acid half-esters of ethoxylated $C_4$-$C_{12}$-alkylphenols (ethoxylation: 1 to 50 mol of ethylene oxide/mol), $C_{12}$-$C_{18}$ sulfo fatty acid alkyl esters, for example of $C_{12}$-$C_{18}$ sulfo fatty acid methyl esters, furthermore of $C_{12}$-$C_{18}$-alkylsulfonic acids and of $C_{10}$-$C_{18}$-alkylarylsulfonic acids. Preference is given to the alkali metal salts of the aforementioned compounds, particularly preferably the sodium salts.

Further examples of anionic surfactants (B) are soaps, for example the sodium or potassium salts of stearic acid, oleic acid, palmitic acid, ether carboxylates, and alkylether phosphates.

In a preferred embodiment of the present invention, anionic surfactant (B) is selected from compounds according to general formula (IV)

$$R^2\text{-}O(CH_2CH_2O)_{x1}\text{-}SO_3M \qquad (IV)$$

wherein

- $R^2$ n-$C_{10}$-$C_{18}$-alkyl, especially with an even number of carbon atoms, for example n-decyl, n-dodecyl, n-tetradecyl, n-hexadecyl, or n-octadecyl, preferably $C_{10}$-$C_{14}$-alkyl, and even more preferably n-$C_{12}$-alkyl,
- x1 being a number in the range of from 1 to 5, preferably 2 to 4 and even more preferably 3.
- M being selected from alkali metals, preferably potassium and even more preferably sodium.

In anionic surfactant (B), x1 may be an average number and therefore n is not necessarily a whole number, while in individual molecules according to formula (III a), x denotes a whole number.

In one embodiment of the present invention, inventive compositions may contain 0.1 to 60 % by weight of anionic

surfactant (B), preferably 5 to 50 % by weight.

Inventive compositions may comprise impurities that stem from the synthesis of polymer (A), for example unreacted mono- or diacid of polyalkylene oxide of which at least 50 mol-% of the alkylene oxide groups are ethylene oxide groups, and polyesters based on monoacid of polyalkylene oxide of which at least 50 mol-% of the alkylene oxide groups are ethylene oxide groups.

In one embodiment of the present invention, inventive compositions comprise at least one enzyme. Enzymes are identified by polypeptide sequences (also called amino acid sequences herein). The polypeptide sequence specifies the three-dimensional structure including the "active site" of an enzyme which in turn determines the catalytic activity of the same. Polypeptide sequences may be identified by a SEQ ID NO. According to the World Intellectual Property Office (WIPO) Standard ST.25 (1998) the amino acids herein are represented using three-letter code with the first letter as a capital or the corresponding one letter.

Any enzyme according to the invention relates to parent enzymes and/or variant enzymes, both having enzymatic activity. Enzymes having enzymatic activity are enzymatically active or exert enzymatic conversion, meaning that enzymes act on substrates and convert these into products. The term "enzyme" herein excludes inactive variants of an enzyme.

A "parent" sequence (of a parent protein or enzyme, also called "parent enzyme") is the starting sequence for introduction of changes (e.g. by introducing one or more amino acid substitutions, insertions, deletions, or a combination thereof) to the sequence, resulting in "variants" of the parent sequences. The term parent enzyme (or parent sequence) includes wild-type enzymes (sequences) and synthetically generated sequences (enzymes) which are used as starting sequences for introduction of (further) changes.

The term "enzyme variant" or "sequence variant" or "variant enzyme" refers to an enzyme that differs from its parent enzyme in its amino acid sequence to a certain extent. If not indicated otherwise, variant enzyme "having enzymatic activity" means that this variant enzyme has the same type of enzymatic activity as the respective parent enzyme.

In describing the variants of the present invention, the nomenclature described as follows is used:

Amino acid substitutions are described by providing the original amino acid of the parent enzyme followed by the number of the position within the amino acid sequence, followed by the substituted amino acid. Amino acid deletions are described by providing the original amino acid of the parent enzyme followed by the number of the position within the amino acid sequence, followed by *. Amino acid insertions are described by providing the original amino acid of the parent enzyme followed by the number of the position within the amino acid sequence, followed by the original amino acid and the additional amino acid. For example, an insertion at position 180 of lysine next to glycine is designated as "Gly180GlyLys" or "G180GK". In cases where a substitution and an insertion occur at the same position, this may be indicated as S99SD+S99A or in short S99AD. In cases where an amino acid residue identical to the existing amino acid residue is inserted, degeneracy in the nomenclature arises. If for example a glycine is inserted after the glycine in the above example this would be indicated by G180GG. Where different alterations can be introduced at a position, the different alterations are separated by a comma, e.g., "Arg170Tyr, Glu" represents a substitution of arginine at position 170 with tyrosine or glutamic acid. Alternatively, different alterations or optional substitutions may be indicated in brackets, e.g., Arg170[Tyr, Gly] or Arg170{Tyr, Gly}; or in short R170 [Y,G] or R170 {Y, G}; or in long R170Y, R170G.

Enzyme variants may be defined by their sequence identity when compared to a parent enzyme. Sequence identity usually is provided as "% sequence identity" or "% identity". For calculation of sequence identities, in a first step a sequence alignment has to be produced. According to this invention, a pairwise global alignment has to be produced, meaning that two sequences have to be aligned over their complete length, which is usually produced by using a mathematical approach, called alignment algorithm. According to the invention, the alignment is generated by using the algorithm of Needleman and Wunsch (J. Mol. Biol. (1979) 48, p. 443-453). Preferably, the program "NEEDLE" (The European Molecular Biology Open Software Suite (EMBOSS)) is used for the purposes of the current invention, with using the programs default parameter (gap open=10.0, gap extend=0.5 and matrix=EBLOSUM62).

According to this invention, the following calculation of %-identity applies: %-identity = (identical residues / length of the alignment region which is showing the respective sequence of this invention over its complete length) *100.

According to this invention, enzyme variants may be described as an amino acid sequence which is at least n% identical to the amino acid sequence of the respective parent enzyme with "n" being an integer between 10 and 100. In one embodiment, variant enzymes are at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, or at least 99% identical when compared to the full-length amino acid sequence of the parent enzyme, wherein the enzyme variant has enzymatic activity.

"Enzymatic activity" means the catalytic effect exerted by an enzyme, which usually is expressed as units per milligram of enzyme (specific activity) which relates to molecules of substrate transformed per minute per molecule of enzyme (molecular activity). Variant enzymes may have enzymatic activity according to the present invention when said enzyme variants exhibit at least 20%, at least 25%, at least 30%, at least 35%, at least 40%, at least 45%, at 10 least 50%, at least 55%, at least 60%, at least 65%, at least 70%, at least 75%, at least 80%, at least 85%, at least 90%, at least 95%, or

100% of the enzymatic activity of the respective parent enzyme.

In one embodiment, enzyme is selected from hydrolases, preferably from proteases, amylases, lipases, cellulases, and mannanases.

In one embodiment of the present invention, inventive compositions comprise

(C) at least one hydrolase, hereinafter also referred to as hydrolase (C), preferably selected from lipases, hereinafter also referred to as lipase (C).

"Lipases", "lipolytic enzyme", "lipid esterase", all refer to enzymes of EC class 3.1.1 ("carboxylic ester hydrolase"). Such a lipase (C) may have lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50). Lipases (C) include those of bacterial or fungal origin.

Commercially available lipases (C) include but are not limited to those sold under the trade names Lipolase™, Lipex™, Lipolex™ and Lipoclean™ (Novozymes A/S), Preferenz™ L (DuPont), Lumafast (originally from Genencor) and Lipomax (Gist-Brocades/ now DSM).

Suitable lipases (C) also include those that are variants of the above described lipases which have lipolytic activity. Suitable lipase variants include variants with at least 40 to 100% identity when compared to the full length polypeptide sequence of the parent enzyme as disclosed above. In one embodiment lipase variants having lipolytic activity may be at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% identical when compared to the full length polypeptide sequence of the parent enzyme as disclosed above.

Lipases (C) have "lipolytic activity". The methods for determining lipolytic activity are well-known in the literature (see, e.g., Gupta et al. (2003), Biotechnol. Appl. Biochem. 37, p. 63-71). E.g. the lipase activity may be measured by ester bond hydrolysis in the substrate para-nitrophenyl palmitate (pNP-Palmitate, C:16) and releases pNP which is yellow and can be detected at 405 nm.

In one embodiment, lipase (C) is selected from fungal triacylglycerol lipase (EC class 3.1.1.3). Fungal triacylglycerol lipase may be selected from lipases of *Thermomyces lanuginosa.* In one embodiment, at least one *Thermomyces lanuginosa* lipase is selected from triacylglycerol lipase according to amino acids 1-269 of SEQ ID NO: 2 of US5869438 and variants thereof having lipolytic activity.

*Thermomyces lanuginosa* lipase may be selected from variants having lipolytic activity which are at least 90%, at least 91%, at least 92%, at least 93%, at least 94%, at least 95%, at least 96%, at least 97%, at least 98% or at least 99% identical when compared to the full length polypeptide sequence of amino acids 1-269 of SEQ ID NO: 2 of US 5,869,438.

*Thermomyces lanuginosa* lipase may be selected from variants having lipolytic activity comprising conservative mutations only, which do not pertain the functional domain of amino acids 1-269 of SEQ ID NO: 2 of US 5,869,438. Lipase variants of this embodiment having lipolytic activity may be at least 95%, at least 96%, at least 97%, at least 98% or at least 99% similar when compared to the full length polypeptide sequence of amino acids 1-269 of SEQ ID NO: 2 of US 5,869,438.

*Thermomyces lanuginosa* lipase may be selected from variants having lipolytic activity comprising at least the following amino acid substitutions when compared to amino acids 1-269 of SEQ ID NO: 2 of US 5,869,438: T231R and N233R. Said lipase variants may further comprise one or more of the following amino acid exchanges when compared to amino acids 1-269 of SEQ ID NO: 2 of US 5,869,438: Q4V, V60S, A150G, L227G, P256K.

*Thermomyces lanuginosa* lipase may be selected from variants having lipolytic activity comprising at least the amino acid substitutions T231R, N233R, Q4V, V60S, A150G, L227G, P256K within the polypeptide sequence of amino acids 1-269 of SEQ ID NO: 2 of US 5,869,438and are at least 95%, at least 96%, or at least 97% similar when compared to the full length polypeptide sequence of amino acids 1-269 of SEQ ID NO: 2 of US 5,869,438.

*Thermomyces lanuginosa* lipase may be selected from variants having lipolytic activity comprising the amino acid substitutions T231R and N233R within amino acids 1-269 of SEQ ID NO: 2 of US5869438 and are at least 95%, at least 96%, at least 97%, at least 98%, or at least 99% similar when compared to the full length polypeptide sequence of amino acids 1-269 of SEQ ID NO: 2 of US 5,869,438.

*Thermomyces lanuginosa* lipase may be a variant of amino acids 1-269 of SEQ ID NO: 2 of US5869438 having lipolytic activity, wherein the variant of amino acids 1-269 of SEQ ID NO: 2 of US 5,869,438is characterized in containing the amino acid substitutions T231R and N233R. Said lipase may be called Lipex herein.

In one embodiment of the present invention, a combination of at least two of the foregoing lipases (C) may be used.

In one embodiment of the present invention, lipases (C) are included in inventive composition in such an amount that a finished inventive composition has a lipolytic enzyme activity in the range of from 100 to 0.005 LU/mg, preferably 25 to 0.05 LU/mg of the composition. A Lipase Unit (LU) is that amount of lipase which produces 1 μmol of titratable fatty acid per minute in a pH stat. under the following conditions: temperature 30° C.; pH = 9.0; substrate is an emulsion of 3.3 wt. % of olive oil and 3.3% gum arabic, in the presence of 13 mmol/l $Ca^{2+}$ and 20 mmol/l NaCl in 5 mmol/l Tris-buffer.

In one embodiment of the present invention, inventive compositions comprise
(D) at least one protease (D), hereinafter also referred to as protease (D).

In one embodiment, at least one protease (D) is selected from the group of serine endopeptidases (EC 3.4.21), most preferably selected from the group of subtilisin type proteases (EC 3.4.21.62). Serine proteases or serine peptidases are characterized by having a serine in the catalytically active site, which forms a covalent adduct with the substrate during the catalytic reaction. A serine protease in the context of the present invention may be selected from the group consisting of chymotrypsin (e.g., EC 3.4.21.1), elastase (e.g., EC 3.4.21.36), elastase (e.g., EC 3.4.21.37 or EC 3.4.21.71), granzyme (e.g., EC 3.4.21.78 or EC 3.4.21.79), kallikrein (e.g., EC 3.4.21.34, EC 3.4.21.35, EC 3.4.21.118, or EC 3.4.21.119,) plasmin (e.g., EC 3.4.21.7), trypsin (e.g., EC 3.4.21.4), thrombin (e.g., EC 3.4.21.5), and subtilisin. Subtilisin is also known as sub-tilopeptidase, e.g., EC 3.4.21.62, the latter hereinafter also being referred to as "subtilisin". The subtilisin related class of serine proteases shares a common amino acid sequence defining a catalytic triad which distinguishes them from the chymotrypsin related class of serine proteases. Subtilisins and chymotrypsin related serine proteases both have a catalytic triad comprising aspartate, histidine and serine.

Proteases are active proteins exerting "protease activity" or "proteolytic activity". Proteolytic activity is related to the rate of degradation of protein by a protease or proteolytic enzyme in a defined course of time.

The methods for analyzing proteolytic activity are well-known in the literature (see e.g. Gupta et al. (2002), Appl. Microbiol. Biotechnol. 60: 381-395). Proteolytic activity may be determined by using Succinyl-Ala-Ala-Pro-Phe-p-nitroanilide (Suc-AAPF-pNA, short AAPF; see e.g. DelMar et al. (1979), Analytical Biochem 99, 316-320) as substrate. pNA is cleaved from the substrate molecule by proteolytic cleavage, resulting in release of yellow color of free pNA which can be quantified by measuring $OD_{405}$.

Proteolytic activity may be provided in units per gram enzyme. For example, 1 U protease may correspond to the amount of protease which sets free 1 μmol folin-positive amino acids and peptides (as tyrosine) per minute at pH 8.0 and 37°C (casein as substrate).

Proteases of the subtilisin type (EC 3.4.21.62) may be bacterial proteases originating from a microorganism selected from *Bacillus, Clostridium, Enterococcus, Geobacillus, Lactobacillus, Lactococcus, Oceanobacillus, Staphylococcus, Streptococcus,* or *Streptomyces* protease, or a Gram-negative bacterial polypeptide such as a *Campylobacter, E. coli, Flavobacterium, Fusobacterium, Helicobacter, Ilyobacter, Neisseria, Pseudomonas, Salmonella,* and *Ureaplasma.*

In one aspect of the invention, at least one protease (D) is selected from *Bacillus alcalophilus, Bacillus amyloliquefaciens, Bacillus brevis, Bacillus circulans, Bacillus clausii, Bacillus coagulans, Bacillus firmus, Bacillus gibsonii, Bacillus lautus, Bacillus lentus, Bacillus licheniformis, Bacillus megaterium, Bacillus pumilus, Bacillus sphaericus, Bacillus stearothermophilus, Bacillus subtilis,* or *Bacillus thuringiensis* protease.

In one embodiment of the present invention, at least one protease (D) is selected from the following: subtilisin from *Bacillus amyloliquefaciens* BPN' (described by Vasantha et al. (1984) J. Bacteriol. Volume 159, p. 811-819 and JA Wells et al. (1983) in Nucleic Acids Research, Volume 11, p. 7911-7925); subtilisin from *Bacillus licheniformis* (subtilisin Carlsberg; disclosed in EL Smith et al. (1968) in J. Biol Chem, Volume 243, pp. 2184-2191, and Jacobs et al. (1985) in Nucl. Acids Res, Vol 13, p. 8913-8926); subtilisin PB92 (original sequence of the alkaline protease PB92 is described in EP 283075 A2); subtilisin 147 and/or 309 (Esperase®, Savinase®, respectively) as disclosed in WO 89/06279; subtilisin from *Bacillus lentus* as disclosed in WO 91/02792, such as from *Bacillus lentus* DSM 5483 or the variants of *Bacillus lentus* DSM 5483 as described in WO 95/23221; subtilisin from *Bacillus alcalophilus* (DSM 11233) disclosed in DE 10064983; subtilisin from *Bacillus gibsonii* (DSM 14391) as disclosed in WO 2003/054184; subtilisin from *Bacillus sp.* (DSM 14390) disclosed in WO 2003/056017; subtilisin from *Bacillus sp.* (DSM 14392) disclosed in WO 2003/055974; subtilisin from *Bacillus gibsonii* (DSM 14393) disclosed in WO 2003/054184; subtilisin having SEQ ID NO: 4 as described in WO 2005/063974; subtilisin having SEQ ID NO: 4 as described in WO 2005/103244; subtilisin having SEQ ID NO: 7 as described in WO 2005/103244; and subtilisin having SEQ ID NO: 2 as described in application DE 102005028295.4.

Examples of useful proteases in accordance with the present invention comprise the variants described in: WO 92/19729, WO 95/23221, WO 96/34946, WO 98/20115, WO 98/20116, WO 99/11768, WO 01/44452, WO 02/088340, WO 03/006602, WO 2004/03186, WO 2004/041979, WO 2007/006305, WO 2011/036263, WO 2011/036264, and WO 2011/072099. Suitable examples comprise especially variants of subtilisin protease derived from SEQ ID NO:22 as described in EP 1921147 (which is the sequence of mature alkaline protease from *Bacillus lentus* DSM 5483) with amino acid substitutions in one or more of the following positions: 3, 4, 9, 15, 24, 27, 33, 36, 57, 68, 76, 77, 87, 95, 96, 97, 98, 99, 100, 101, 102, 103, 104, 106, 118, 120, 123, 128, 129, 130, 131, 154, 160, 167, 170, 194, 195, 199, 205, 206, 217, 218, 222, 224, 232, 235, 236, 245, 248, 252 and 274 (according to the BPN' numbering), which have proteolytic activity. In one embodiment, such a protease is not mutated at positions Asp32, His64 and Ser221 (according to BPN' numbering).

In one embodiment, at least one protease (D) has a sequence according to SEQ ID NO:22 as described in EP 1921147, or a protease which is at least 80% identical thereto and has proteolytic activity. In one embodiment, said protease is characterized by having amino acid glutamic acid, or aspartic acid, or asparagine, or glutamine, or alanine, or glycine, or serine at position 101 (according to BPN' numbering) and has proteolytic activity. In one embodiment, said protease comprises one or more further substitutions: (a) threonine at position 3 (3T), (b) isoleucine at position 4 (4I), (c)

alanine, threonine or arginine at position 63 (63A, 63T, or 63R), (d) aspartic acid or glutamic acid at position 156 (156D or 156E), (e) proline at position 194 (194P), (f) methionine at position 199 (199M), (g) isoleucine at position 205 (205I), (h) aspartic acid, glutamic acid or glycine at position 217 (217D, 217E or 217G), (i) combinations of two or more amino acids according to (a) to (h).

At least one protease (D) may be at least 80% identical to SEQ ID NO:22 as described in EP 1921147 and is characterized by comprising one amino acid (according to (a)-(h)) or combinations according to (i) together with the amino acid 101E, 101D, 101N, 101Q, 101A, 101G, or 101S (according to BPN' numbering). In one embodiment, said protease is characterized by comprising the mutation (according to BPN' numbering) R101E, or S3T + V4I + V205I, or R101E and S3T, V4I, and V205I, or S3T + V4I + V199M + V205I + L217D, and having proteolytic activity. A protease having a sequence according to SEQ ID NO: 22 as described in EP 1921147 with 101E may be called Lavergy herein.

In one embodiment, protease according to SEQ ID NO:22 as described in EP 1921147 is characterized by comprising the mutation (according to BPN' numbering) S3T + V4I + S9R + A15T + V68A + D99S + R101S + A103S + I104V + N218D, and by having proteolytic activity.

Inventive compositions may comprise a combination of at least two proteases, preferably selected from the group of serine endopeptidases (EC 3.4.21), more preferably selected from the group of subtilisin type proteases (EC 3.4.21.62) - all as disclosed above.

It is preferred to use a combination of lipase (C) and protease (D) in compositions, for example 1 to 2% by weight of protease (D) and 0.1 to 0.5% by weight of lipase (C), both referring to the total weight of the composition.

In the context of the present invention, lipase (C) and/or protease (D) is deemed called stable when its enzymatic activity "available in application" equals at least 60% when compared to the initial enzymatic activity before storage. An enzyme may be called stable within this invention if its enzymatic activity available in application is at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or at least 99.5% when compared to the initial enzymatic activity before storage.

Subtracting a% from 100% gives the "loss of enzymatic activity during storage" when compared to the initial enzymatic activity before storage. In one embodiment, an enzyme is stable according to the invention when essentially no loss of enzymatic activity occurs during storage, i.e. loss in enzymatic activity equals 0% when compared to the initial enzymatic activity before storage. Essentially no loss of enzymatic activity within this invention may mean that the loss of enzymatic activity is less than 30%, less than 25%, less than 20%, less than 15%, less than 10%, less than 9%, less than 8%, less than 7%, less than 6%, less than 5%.

Inventive compositions may comprise ingredients other than the aforementioned. Examples are non-ionic surfactants, fragrances, dyestuffs, biocides, preservatives, enzymes, hydrotropes, builders, viscosity modifiers, polymers, buffers, defoamers, and anti-corrosion additives.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (IV a)

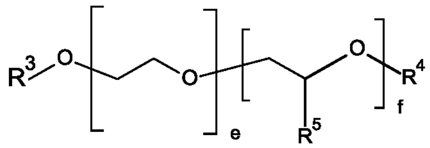

(IV a)

in which the variables are defined as follows:

$R^5$ is identical or different and selected from hydrogen and linear $C_1$-$C_{10}$-alkyl, preferably in each case identical and ethyl and particularly preferably hydrogen or methyl,

$R^3$ is selected from $C_8$-$C_{22}$-alkyl, branched or linear, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,

$R^4$ is selected from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

$R^5$ is identical or different and selected from hydrogen and linear $C_1$-$C_{10}$-alkyl, preferably in each case identical and ethyl and particularly preferably hydrogen or methyl,

The variables e and f are in the range from zero to 300, where the sum of e and f is at least one, preferably in the range of from 3 to 50. Preferably, e is in the range from 1 to 100 and f is in the range from 0 to 30.

In one embodiment, compounds of the general formula (II) may be block copolymers or random copolymers, preference being given to block copolymers.

Other preferred examples of alkoxylated alcohols are, for example, compounds of the general formula (IV b)

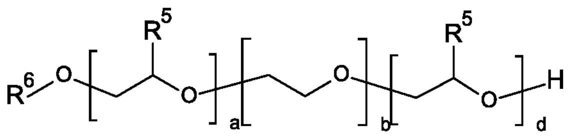

(IV b)

in which the variables are defined as follows:

$R^5$ is identical or different and selected from hydrogen and linear $C_1$-$C_0$-alkyl, preferably identical in each case and ethyl and particularly preferably hydrogen or methyl,

$R^3$ is selected from $C_6$-$C_{20}$-alkyl, branched or linear, in particular n-$C_8H_{17}$, n-$C_{10}H_{21}$, n-$C_{12}H_{25}$, n-$C_{13}H_{27}$, n-$C_{15}H_{31}$, n-$C_{14}H_{29}$, n-$C_{16}H_{33}$, n-$C_{18}H_{37}$,

a is a number in the range from zero to 10, preferably from 1 to 6,

b is a number in the range from 1 to 80, preferably from 4 to 20,

d is a number in the range from zero to 50, preferably 4 to 25.

The sum a + b + d is preferably in the range of from 5 to 100, even more preferably in the range of from 9 to 50.

Compounds of the general formula (IV a) and (IV b) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear $C_4$-$C_{16}$-alkyl polyglucosides and branched $C_8$-$C_{14}$-alkyl polyglycosides such as compounds of general average formula (IV c) are likewise suitable.

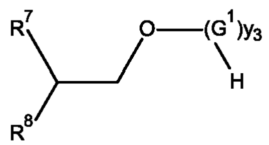

(IV c)

wherein:

$R^7$ is $-(CH_2)_2-R^8$,

$R^8$ is $C_1$-$C_4$-alkyl, in particular ethyl, n-propyl or isopropyl,

$G^1$ is selected from monosaccharides with 4 to 6 carbon atoms, especially from glucose and xylose,

y3 in the range of from 1.1 to 4, y3 being an average number,

Further examples of non-ionic surfactants are compounds of general formula (V) and (VI)

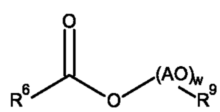

(V)

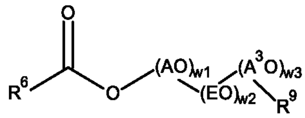

(VI)

AO is selected from ethylene oxide, propylene oxide and butylene oxide,
EO is ethylene oxide, $CH_2CH_2$-O,
$R^9$ selected from $C_8$-$C_{18}$-alkyl, branched or linear, and $R^6$ is defined as above.
$A^3O$ is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (VII)

$$R^{10}R^{11}R^{12}N \rightarrow O \qquad (VII)$$

wherein $R^{10}$, $R^{11}$ and $R^{12}$ are selected independently from each other from aliphatic, cycloaliphatic or $C_2$-$C_4$-alkylene $C_{10}$-$C_{20}$-alkylamido moieties. Preferably, $R^{12}$ is selected from $C_8$-$C_{20}$-alkyl or $C_2$-$C_4$-alkylene $C_{10}$-$C_{20}$-alkylamido and $R^{10}$ and $R^{11}$ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial®, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), benzoic acid, sorbic acid, iodopropynyl butylcarbamate ("IPBC"), dichlorodimethylhydantoine ("DCDMH"), bromochlorodimethylhydantoine ("BCDMH"), and dibromodimethylhydantoine ("DBDMH").

Examples particularly of interest are the following antimicrobial agents and/or preservatives:

4,4'-dichloro 2-hydroxydiphenyl ether (CAS-No. 3380-30-1), further names: 5-chloro-2-(4-chlorophenoxy) phenol, Diclosan, DCPP, which is commercially available as a solution of 30 wt% of 4,4'-dichloro 2-hydroxydiphenyl ether in 1,2 propyleneglycol under the trade name Tinosan® HP 100; and

2-Phenoxyethanol (CAS-no. 122-99-6, further names: Phenoxyethanol, Methylphenylglycol, Phenoxetol, ethylene glycol phenyl ether, Ethylene glycol monophenyl ether, Protectol® PE);

2-bromo-2-nitropropane-1,3-diol (CAS-No. 52-51-7, further names: 2-bromo-2-nitro-1,3-propanediol, Bronopol®, Protectol® BN, Myacide AS);

Glutaraldehyde (CAS-No. 111-30-8, further names: 1-5-pentandial, pentane-1,5-dial, glutaral, glutardialdehyde, Protectol® GA, Protectol® GA 50, Myacide® GA);

Glyoxal (CAS No. 107-22-2; further names: ethandial, oxylaldehyde, 1,2-ethandial, Protectol® GL);

2-butyl-benzo[d]isothiazol-3-one (BBIT, CAS No. 4299-07-4); 2-methyl-2H-isothiazol-3-one (MIT, CAS No 2682-20-4); 2-octyl-2H-isothiazol-3-one (OIT, CAS No. 26530-20-1); 5-Chloro-2-methyl-2H-isothiazol-3-one (CIT, CMIT, CAS No. 26172-55-4); mixtures of 5-chloro-2-methyl-2H- isothiazol-3-one (CMIT, EINECS 247-500-7) and 2-methyl-2H-isothiazol-3-one (MIT, EINECS 220-239-6) (Mixture of CMIT/MIT, CAS No. 55965-84-9); 1,2-benzisothiazol-3(2H)-one (BIT, CAS No. 2634-33-5);

Hexa-2,4-dienoic acid (Sorbic acid, CAS No. 110-44-1) and its salts, e.g., calcium sorbate, sodium sorbate, Potassium (E,E)-hexa-2,4-dienoate (Potassium Sorbate, CAS No. 24634-61-5);

Lactic acid and its salts; especially sodium lactate,

L-(+)-lactic acid (CAS No. 79-33-4);

Benzoic acid (CAS No 65-85-0, CAS No. 532-32-1) and salts of benzoic acid, e.g., sodium benzoate, ammonium benzoate, calcium benzoate, magnesium benzoate, MEA-benzoate, potassium benzoate;

Salicylic acid and its salts, e.g., calcium salicylate, magnesium salicylate, MEA salicylate, sodium salicylate, potassium salicylate, TEA salicylate; Benzalkonium chloride, benzalkonium bromide, benzalkonium saccharinate (CAS Nos 8001-54-5, 63449-41-2, 91080-29-4, 68989-01-5, 68424-85-1, 68391-01-5, 61789-y71-7, 85409-22-9);

Didecyldimethylammonium chloride (DDAC, CAS No. 68424-95-3 and CAS No. 7173-51-5);

N-(3-aminopropyl)-N-dodecylpropane-1,3-diamine (Diamine, CAS No. 2372-82-9);

Peracetic acid (CAS No. 79-21-0);

Hydrogen peroxide (CAS No. 7722-84-1);

Biocide or preservative may be added to the inventive composition in a concentration of 0.001 to 10% relative to the

total weight of the composition. Preferably, inventive compositions contain 2-phenoxyethanol in a concentration of 0.1 to 2% or 4,4'-dichloro 2-hydroxydiphenyl ether (DCPP) in a concentration of 0.005 to 0.6%.

The invention thus further pertains to a method of preserving an inventive composition against microbial contamination or growth, which method comprises addition of 2-phenoxyethanol.

The invention thus further pertains to a method of providing an antimicrobial effect on textiles after treatment with an inventive composition containing 4,4'-dichloro 2-hydroxydiphenyl ether (DCPP).

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrlyates, for example polyacrlyic acid cross-linked with bis-(meth)acrylamide, furthermore silicic acid, clay such as - but not limited to - montmorrilionite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of polymers other than polymer (A) are especially polyacrylic acid and its respective alkali metal salts, especially its sodium salt. A suitable polymer is in particular polyacrylic acid, preferably with an average molecular weight $M_w$ in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terephthalates, and polyethylene terephthalates that are end-capped with one or two hydrophilic groups per molecule, hydrophilic groups being selected from $CH_2CH_2CH_2$-$SO_3Na$, $CH_2CH(CH_2$-$SO_3Na)_2$, and $CH_2CH(CH_2SO_2Na)CH_2$-$SO_3Na$.

Examples of buffers are monoethanolamine and N,N,N-triethanolamine.

Examples of defoamers are silicones.

Inventive compositions are not only good in cleaning soiled laundry with respect to organic fatty soil such as oil. Inventive liquid detergent compositions are very useful for removing non-bleachable stains such as, but not limited to stains from red wine, tea, coffee, vegetables, and various fruit juices like berry juices from laundry. They still do not leave residues on the clothes.

A further aspect of the present invention is therefore the use of inventive compositions for laundry care. Laundry care in this context includes laundry cleaning.

In another aspect, inventive compositions are useful for hard surface cleaning. A further aspect of the present invention is therefore the use of inventive compositions for hard surface cleaning.

In the context of the present invention, the term "composition for hard surface cleaning" includes cleaners for home care and for industrial or institutional applications. The term "composition for hard surface cleaning" includes compositions for dishwashing, especially hand dishwash and automatic dishwashing and ware-washing, and compositions for hard surface cleaning such as, but not limited to compositions for bathroom cleaning, kitchen cleaning, floor cleaning, descaling of pipes, window cleaning, car cleaning including truck cleaning, furthermore, open plant cleaning, cleaning-in-place, metal cleaning, disinfectant cleaning, farm cleaning, high pressure cleaning, but not laundry detergent compositions. A special embodiment of compositions for hard surface cleaning are automatic dishwashing compositions.

In the context of the present invention, the terms "compositions for hard surface cleaning" and "compositions for hard surface cleaners" are used interchangeably.

In the context of the present invention and unless expressly stated otherwise, percentages in the context of ingredients of laundry detergent compositions are percentages by weight and refer to the total solids content of the respective laundry detergent composition. In the context of the present invention and unless expressly stated otherwise, percentages in the context of ingredients of detergent composition for hard surface cleaners are percentages by weight and refer to the total solids content of the detergent composition for hard surface cleaning.

Inventive compositions when used for automatic dishwashing preferably contain

(E) at least one builder component selected from aminopolycarboxylic acids and preferably their alkali metal salts, in the context of the present invention also referred to as complexing agent (E) or sequestrant (E). In the context of the present invention, the terms sequestrants and chelating agents are used interchangeably.

Examples of sequestrants (E) are alkali metal salts of MGDA (methyl glycine diacetic acid), GLDA (glutamic acid diacetic acid), IDS (iminodisuccinate), EDTA, and polymers with complexing groups like, for example, polyethylenimine in which 20 to 90 mole-% of the N-atoms bear at least one $CH_2COO^-$ group, and their respective alkali metal salts, especially

their sodium salts, for example MGDA-$Na_3$, GLDA-$Na_4$, or IDS-$Na_4$.

Preferred sequestrants are those according to general formula (IX a)

$$[CH_3\text{-}CH(COO)\text{-}N(CH_2\text{-}COO)_2]M_{3-x2}H_{x2} \qquad \text{(IX a)}$$

wherein M is selected from ammonium and alkali metal cations, same or different, for example cations of sodium, potassium, and combinations of at least two of the foregoing. Ammonium may be substituted with alkyl but non-substituted ammonium $NH_4^+$ is preferred. Preferred examples of alkali metal cations are sodium and potassium and combinations of sodium and potassium, and even more preferred in compound according to general formula (II a) all M are the same and they are all Na;

and x2 in formula (II a) is in the range of from zero to 1.0,

or (IX b)

$$[OOC\text{-}CH_2CH_2\text{-}CH(COO)\text{-}N(CH_2\text{-}COO)_2]M_{4-x3}H_{x3} \qquad \text{(IX b)}$$

wherein M is as defined above, and x3 in formula (IX b) is in the range of from zero to 2.0, preferably to 1.0,

or (IX c)

$$[OOC\text{-}CH_2\text{-}CH(COO)]\text{-}N\text{-}CH(COO)\text{-}CH_2\text{-}COO]M_{4-x4}H_{x4} \qquad \text{(IX c)}$$

wherein M is as defined above, and x4 in formula (IX c) is in the range of from zero to 2.0, preferably to 1.0.

In one embodiment of the present invention, said inventive composition contains a combination of at least two of the foregoing, for example a combination of chelating agent according to general formula (IX a) and a chelating agent according to general formula (IX b).

Chelating agents according to the general formulae (IX a) and (IX b) are preferred. Even more preferred are chelating agents according to the general formula (IX a).

In one embodiment of the present invention, compound according to general formula (IX a) is selected from ammonium or alkali metal salt of racemic MGDA and from ammonium and alkali metal salts of mixtures of L- and D-enantiomers according to formula (IX a), said mixture containing predominantly the respective L-isomer with an enantiomeric excess (ee) in the range of from 5 to 99%, preferably 5 to 95%, more preferably from 10 to 75% and even more preferably from 10 to 66%.

In one embodiment of the present invention, compound according to general formula (IX b) is selected from at least one alkali metal salt of a mixture of L- and D- enantiomers according to formula (IX b), said mixture containing the racemic mixture or preferably predominantly the respective L-isomer, for example with an enantiomeric excess (ee) in the range of from 5 to 99%, preferably 15 to 95%.

The enantiomeric excess of compound according to general formula (IX a) may be determined by measuring the polarization (polarimetry) or preferably by chromatography, for example by HPLC with a chiral column, for example with one or more cyclodextrins as immobilized phase or with a ligand exchange (Pirkle-brush) concept chiral stationary phase. Preferred is determination of the ee by HPLC with an immobilized optically active amine such as D-penicillamine in the presence of copper(+II) salt. The enantiomeric excess of compound according to general formula (IX b) salts may be determined by measuring the polarization (polarimetry).

Due to the environmental concerns raised in the context with the use of phosphates, it is preferred that advantageous compositions are free from phosphate. "Free from phosphate" should be understood in the context of the present invention as meaning that the content of phosphate and polyphosphate is in sum in the range of from detection level to 1% by weight, preferably from 10 ppm to 0.2% by weight, determined by gravimetry.

In one embodiment of the present invention, inventive compositions contain in the range of from 0.5 to 50% by weight of sequestrant (E), preferably 1 to 35% by weight, referring to the total solids content.

In order to be suitable as liquid laundry compositions, inventive compositions may be in bulk form or as unit doses, for example in the form of sachets or pouches. Suitable materials for pouches are water-soluble polymers such as polyvinyl alcohol.

In a preferred embodiment of the present invention, inventive compositions are liquid or gel-type at ambient

temperature. In another preferred embodiment of the present invention, inventive compositions are solid at ambient temperature, for example powders or tabs.

In one embodiment of the present invention, inventive compositions are liquid or gel-type and have a pH value in the range of from 7 to 9, preferably 7.5 to 8.5. In embodiments where inventive compositions are solid, their pH value may be in the range of from 7.5 to 11, determined after dissolving 1 g/100 ml in distilled water and at ambient temperature. In embodiments where inventive compositions are used for hard surfaces like tiles, for example bathroom tiles, their pH value may even be acidic, for example from 3 to 6.

In one embodiment of the present invention, inventive compositions are liquid or gel-type and have a total solids content in the range of from 8 to 80%, preferably 10 to 50%, determined by drying under vacuum at 80°C.

Also disclosed but not claimed is a method of improving the cleaning performance of a liquid detergent composition, by adding a polymer (A) to a detergent composition preferably comprising at least one lipase and/or at least one protease.

The term "improved cleaning performance" herein may indicate that polymers (A) provide better, i.e., improved, properties in stain removal under relevant cleaning conditions, when compared to the cleaning performance of a detergent composition lacking polymer (A). In one embodiment, "improved cleaning performance" means that the cleaning performance of a detergent comprising polymer (A) and at least one enzyme, preferably at least one hydrolase (C), especially at least one lipase (C) and/or at least one protease (D), is improved when compared to the cleaning performance of a detergent comprising polymer (A) and no enzyme. In one embodiment, "improved cleaning performance" means that the cleaning performance of a detergent comprising polymer (A) and an enzyme, preferably hydrolase (C), more preferably lipase (C) and/or protease (D), is improved when compared to the cleaning performance of a detergent comprising at least one enzyme, preferably at least one hydrolase (C), preferably lipase (C) and/or at least one protease (D) and no polymer (A).

The term "relevant cleaning conditions" herein refers to the conditions, particularly cleaning temperature, time, cleaning mechanics, suds concentration, type of detergent and water hardness, actually used in laundry machines, automatic dish washers or in manual cleaning processes.

Further disclosed is a process for making polymers (A). Said process comprises the step of reacting

($\alpha$) at least one molecule bearing a primary amino group with

($\beta$) either at least one compound selected from alkoxylated di- or polyol esterified with at least two equivalents (meth) acrylate per molecule and from bis(meth)acrylamides, or with

($\gamma$) $C_1$-$C_3$-alkyl (meth)acrylate ($\gamma$1) such as methyl (meth)acrylate or ethyl (meth)acrylate or isopropyl(meth)acrylate, followed by addition of an aliphatic diol or triol ($\gamma$2), and, optionally,

($\delta$) with at least one mono(meth)acrylate of a polyethylene glycol that is non-capped or capped with a $C_1$-$C_{10}$-alkyl group or esterified with an aliphatic $C_2$-$C_{20}$-alkyl fatty acid or with an $C_{10}$-$C_{20}$-alkenyl fatty acid,

($\varepsilon$) or, optionally, with an amine according to formula H-$NR^{2a}R^{2b}$.

Said process will be explained in more detail below. The reactants ($\alpha$), ($\beta$), ($\gamma$) and - if applicable - ($\delta$) or ($\varepsilon$) will also be referred as compound ($\alpha$), compound ($\beta$), compound ($\gamma$1), compound ($\gamma$2), compound ($\delta$), or compound ($\varepsilon$), respectively, or simply as ($\alpha$), ($\beta$), ($\gamma$1), ($\gamma$2), and - if applicable - ($\delta$) or ($\varepsilon$).

First, at least one compound ($\alpha$) is selected that bears a primary amino group, -$NH_2$, preferably exactly one compound ($\alpha$) is selected. Such compound ($\alpha$) bears exactly one primary amino group per molecule. Compound ($\alpha$) may bear functional groups other than primary amino groups, for example tertiary amino groups or hydroxyl groups, but no secondary amino groups.

Compound ($\alpha$) may bear at least one tertiary amine group per molecule.

In a preferred embodiment, such compound ($\alpha$) has the formula $R^1$-$NH_2$. $R^1$ is selected from $C_2$-$C_4$-alkyl, for example ethyl, isopropyl, n-propyl, n-butyl, isobutyl, sec.-butyl or tert.-butyl, each non-substituted or substituted with hydroxy or -$NR^{2a}R^{2b}$ wherein $R^{2a}$ and $R^{2b}$ are same or different and selected from $C_1$-$C_4$-alkyl, preferably methyl or ethyl, or $NR^{2a}R^{2b}$ together form a $C_5$-$C_6$-cycloalkylenamino or 1-imidazole group. $C_1$-$C_4$-alkyl being defined as above, or $NR^{2a}R^{2b}$ together form a $C_5$-$C_6$-cycloalkylenamino group. Preferred examples of -$NR^{2a}R^{2b}$ are -$N(CH_3)_2$, -$N(C_2H_5)_2$, -$N(CH_2)_4$, and -$N(CH_2)_5$.

Examples of suitable compounds ($\alpha$) are ethylamine, 2-ethanolamine, 2-(N,N-dimethylamino)-ethylamine, 2-(N,N-diethylamino)ethylamine, isopropylamine, n-propylamine, 3-aminopropyl-1-imidazole, 3-(N,N-dimethylamino) propylamine, 3-(N,N-diethylamino)propylamine, butylamine, tert.-butylamine, 2-methoxyethylamine, 3-methoxypropylamine, and 2-amino-1-butanol. Preferred compounds ($\alpha$) are 2-(N,N-dimethylamino)ethylamine, 2-(N,N-diethylamino) ethylamine, and isopropylamine.

Compound ($\beta$) is selected from bisacrylamides, for example methylene bis(meth)acrylamide, methylene bismethacrylamide, ethylene bisacrylamide, N,N'-(1,2-

Dihydroxyethylene)bisacrylamide, piperazine bisacrylamide, N,N'-hexamethylenebis(methacrylamide),

poly(ethylene glycol) diacrylamide, and from alkoxylated di- or polyols esterified with at least two equivalents (meth) acrylate per molecule. Examples of diols are aliphatic $C_2$-$C_6$-diols, preferably $C_2$-$C_4$-diols, such as ethylene glycol, 1,2-propylene glycol, 1,3-propylenediol, 1,4-butylene diol.

Preferred are aliphatic $C_2$-$C_4$-diols, such as ethylene glycol and 1,2-propylene glycol.

In the context of the present invention, the term "alkoxylated" includes poly-alkoxylated, and the term "poly" refers to two or more alkoxylate groups per diol or polyol. Preferred polyalkoxylation is selected from polyethoxylation and polypropoxylation and combinations thereof, preferably with more moles of EO than PO. In an even more preferred embodiment, alkoxylated diols refer to $(AO)_{y1}$, with AO being selected from ethylene oxide ("EO") and propylene oxide ("PO") and combinations thereof, and y1 being from 2 to 200, preferably 2 to 10.

In embodiments wherein $(AO)_{y1}$ refers to combinations from EO and PO, such EO and PO may be arranged randomly or preferably block-wise, in two or three blocks. In preferred embodiments wherein $(AO)_{y1}$ refers to combinations from EO and PO, at least 50 mol-% of AO are EO, for example 50 to 90 mole-%, more preferably 65 to 90 mol-%.

Even more preferably, all AO in $(AO)_{y1}$ are EO.

Examples of compounds (β) are diethylene glycol bis(meth)acrylate, dipropylene glycol bis(meth)acrylate, and polyethylene glycol bis(meth)acrylate with an average molecular weight $M_w$ in the range of from 230 to 2,500 g/mol, preferred are 250 to 1250 g/mol.

In each case, the acrylates are preferred over the respective methacrylates.

The amounts are preferably selected in a way that the molar amount of (α) to (meth)acrylate groups of (β) is in the range of from 0.9:1 to 2:1 mol equivalent, preferably 0.9:1 to 1.1:1 mol equivalent, most preferably 1.0:1.0 mol equivalent. It is to be understood that in each molecule of compound (α), two protons are available for reaction.

The reaction of compound (α) with compound (β) may be carried out in a solvent or a combination of solvents. Suitable solvents are alcohols such as methanol, ethanol, isopropanol, n-butanol, ethers like di-n-butyl ethers and THF as well as 1,4-dioxane, as well as mixtures from water and any selected from alcohols such as methanol, ethanol, isopropanol, n-butanol, ethers like THF as well as 1,4-dioxane to the extent they are miscible with water at the reaction temperature. In other embodiments, the inventive process is carried out in bulk.

The reaction of compound (α) with compound (β) may be carried out at a temperature in the range of from 50 to 150°C, preferably 60 to 120°C. In embodiments where a solvent is used, the boiling point of the solvent serves as upper temperature limit.

The reaction of compound (α) with compound (β) may have a duration in the range of from 1 hour to 24 hours, preferred 2 to 6 hours.

The reaction of compound (α) with compound (β) may be performed at a pH value in the range of from 8 to 11 to avoid protonation of the amino group of compound (α). The pH value may be controlled through addition of a strong base such as, but not limited to NaOH or KOH and may be determined by taking a sample from the reaction mixture. The sample is subsequently diluted with water in a weight ratio of 1:1. The pH value of the sample is determined at 23 °C and the pH of the reaction mixture is adjusted accordingly through the addition of strong base.

In another version, compound (α) is reacted with a combination of compound (γ1) and compound (γ2), preferably subsequently.

$C_1$-$C_3$-alkyl (meth)acrylate (γ1) is selected from methyl (meth)acrylate, ethyl(meth)acrylate, n-propyl(meth) acrylate, and isopropyl(meth)acrylate, wherein in each case the acrylates are preferred over the respective methacrylates. More preferred are ethyl acrylate and isopropyl acrylate.

The amounts are preferably selected in a way that the molar amount of (α) to (meth)acrylate groups of (γ1) is in the range of from 1:1.8 to 1:2.2, preferably 1:1.9 to 1:2.1, even more preferably as close to 1:2 as possible. It is to be understood that in each molecule of compound (α), two protons are available for reaction.

The reaction of compound (α) with compound (γ1) may be carried out in a solvent or a combination of solvents. Suitable solvents are alcohols such as methanol, ethanol, isopropanol, n-butanol, ethers like di-n-butyl ethers and THF as well as 1,4-dioxane, as well as mixtures from water and any selected from alcohols such as methanol, ethanol, isopropanol, n-butanol, ethers like THF as well as 1,4-dioxane to the extent they are miscible with water at the reaction temperature. In other embodiments, the inventive process is carried out in bulk.

The reaction of compound (α) with compound (γ1) may be carried out at a temperature in the range of from 50 to 150°C, preferably 60 to 90°C. In embodiments where a solvent is used, the boiling point of the solvent serves as upper temperature limit.

The reaction of compound (α) with compound (γ1) may have a duration in the range of from one to 12 hours, preferably 2 to 6 hours.

Preferably, the reaction of compound (α) with compound (γ1) is performed at a pH value in the range of from 8 to 11 to avoid protonation of the amino group of compound (α). The pH value may be controlled through addition of a strong base such as, but not limited to NaOH or KOH and may be determined by taking a sample from the reaction mixture. The sample is subsequently diluted with water in a weight ratio of 1:1. The pH value of the sample is determined at 23 °C and the pH of the reaction mixture is adjusted accordingly through the addition of a strong base.

An intermediate is obtained. Such intermediate may be purified, however, it is preferred to only remove solvents, if any, and to react the intermediate with compound ($\gamma$2). This step may be considered as trans-esterification.

Compound ($\gamma$2) is selected from di- or polyols that may be alkoxylated. Examples of diols are aliphatic $C_2$-$C_6$-diols, preferably $C_2$-$C_4$-diols, such as ethylene glycol, 1,2-propylene glycol, 1,3-propylenediol, 1,4-butylene diol, 2,3-butane diol, and isosorbide.

Preferred are aliphatic $C_2$-$C_4$-diols, such as ethylene glycol and 1,2-propylene glycol.

In the context of the present invention, the term "alkoxylated" includes poly-alkoxylated, and the term "poly" refers to two or more alkoxylate groups per diol or polyol. Preferred polyalkoxylation is selected from polyethoxylation and polypropoxylation and combinations thereof, preferably with more moles of EO than PO. In an even more preferred embodiment, alkoxylated diols refer to $(AO)_{y1}$-H with AO being selected from ethylene oxide ("EO") and propylene oxide ("PO") and combinations thereof, and y1 being from 2 to 200, preferably 2 to 10.

In embodiments wherein $(AO)_{y1}$ H refers to combinations from EO and PO, such EO and PO may be arranged randomly or preferably block-wise, in two or three blocks. In preferred embodiments wherein $(AO)_{y1}$ refers to combinations from EO and PO, at least 50 mol-% of AO are EO, for example 50 to 90 mole-%, more preferably 65 to 90 mol-%.

Even more preferably, all AO in $(AO)_{y1}$-H are EO.

Examples of compounds ($\gamma$2) are ethylene glycol, propylene glycol, diethylene glycol, dipropylene glycol, and polyethylene glycol with an average molecular weight $M_n$ in the range of from 320 to 2,500 g/mol, preferred are 600 to 1,200 g/mol.

The amounts are preferably selected in a way that the molar ratio of $C_1$-$C_3$-alkylester groups of the intermediate to hydroxyl groups of ($\gamma$2) is in the range of from 1.2:1 to 1:1.5, preferably 1:1 to 1:1.1.

The reaction of intermediate with compound ($\gamma$2) may be carried out in a solvent or a combination of solvents. Suitable solvents are alcohols such as methanol, ethanol, isopropanol, n-butanol, ethers like di-n-butyl ethers and THF as well as 1,4-dioxane. Water is not a suitable solvent. In a preferred embodiment, the transesterification is carried out in bulk.

The reaction of intermediate with compound ($\gamma$2) may be carried out at a temperature in the range of from 50 to 220°C, preferably 60 to 90°C. In embodiments where a solvent is used, the boiling point of the solvent serves as upper temperature limit.

The reaction of intermediate with compound ($\gamma$2) may have a duration in the range of from 6 to 48 hours, preferably 10 to 24 hours.

The reaction of of intermediate with compound ($\gamma$2) may be carried out in the absence of a catalyst. It is preferred, though, to use a catalyst. Examples are methanesulfic acid, para-toluolenesulfonic acid, $NaOCH_3$, scandiumtriflate (trifluoro acetate), 1,5,7-triazabicyclo[4,4,0]dec-5-ene, titanoctanoate, and $Ti(OBu)_4$.

In the reaction of intermediate with compound ($\gamma$2), the respective $C_1$-$C_3$-alcohol is formed as by-product. It is preferred to remove $C_1$-$C_3$-alcohol, for example by use of a Dean-Stark apparatus or by simply distilling it off, for example under reduced pressure.

A polymer (A) is obtained. Polymer (A) may be purified or otherwise worked up, for example by removal of solvents used during synthesis, or by deactivation of any catalyst used, e.g., by neutralization.

Optionally, at least one compound ($\delta$) or at least one compound ($\varepsilon$) may be reacted with polymer (A).

Compounds ($\delta$) are selected from mono(meth)acrylates of a polyethylene glycol that is non-capped or capped with a $C_1$-$C_{10}$-alkyl group, preferably with methyl, or esterified with an aliphatic $C_2$-$C_{20}$-alkyl fatty acid or with a $C_{10}$-$C_{20}$-alkenyl fatty acid.

Examples of $C_2$-$C_{20}$-alkyl fatty acids are capric acid, lauric acid, myristic acid, palmitic acid, stearic acid or arachidic acid; or of a $C_{10}$-$C_{20}$-alkenyl fatty acid, for example oleic acid, palmitoleic acid, linoleic acid, linoelaidic acid, and $\alpha$-linolenic acid, preferred are oleic acid, lauric acid, palmitic acid and stearic acid.

A conversion with compound ($\delta$) is useful if polymer (A) still bears unreacted amino groups, for example one to two unreacted primary or secondary amine groups per polymer chain. Unreacted amino groups may remain in embodiments where an excess of compound ($\alpha$) was used.

Compounds ($\varepsilon$) are amines of the formula H-$NR^{2a}R^{2b}$ wherein $R^{2a}$ and $R^{2b}$ are same or different and selected from $C_1$-$C_4$-alkyl, preferably methyl or ethyl, or $NR^{2a}R^{2b}$ together form a $C_5$-$C_6$-cy-cloalkylenamino or 1-imidazole group. $C_1$-$C_4$-alkyl being defined as above, or $NR^{2a}R^{2b}$ together form a $C_5$-$C_6$-cycloalkylenamino group. Preferred examples of H-$NR^{2a}R^{2b}$ are H-$N(CH_3)_2$, H-$N(C_2H_5)_2$, H-$N(CH_2)_4$, and H-$N(CH_2)_5$.

A conversion with compound ($\varepsilon$) is useful if polymer (A) still bears unreacted (meth)acrylate groups, for example one to two unreacted (meth)acrylate per polymer chain. Unreacted (meth)acrylate groups may remain in embodiments where a short-cut of compound ($\alpha$) was used.

The reaction conditions for conversions with compound ($\delta$) or ($\varepsilon$) correspond to the reaction conditions of the reaction of compound ($\alpha$) with compound ($\beta$), *mutatis mutandis.*

The invention is further illustrated by working examples.

General: $^1$H-NMR spectra were recorded in $D_6$-DMSO as solvent. The conversion of acrylate was determined by determination of the ratio of olefinic protons to protons from the tertiary C atom of the propylene glycol moiety.

K values were determined in 1% by weight aqueous solutions. Gel permeation chromatography (GPC) was performed in hexafluoroisoproanol with 0.05% by weight of trifluoro acetic acid.

I. Syntheses of polymers (A)

I.1 Synthesis of polymer (A.1)

A four-neck-round-bottom flask with stirrer and dropping funnel was charged with a solution of 454.26 g dipropylene glycol diacrylate (β.1) (80%, 1.5 mol, impurity: dipropylene glycol) in 350 g isopropanol. A mixture of 350 g water and 153.27 g 3-(dimethylamino)-1-propylamine (α.1) (102 g/mol, 1.5 mol) was added slowly, stirred at 50°C for 4 h, and then cooled down to ambient temperature. In $^1$H-NMR a reduction of the intensity of the acrylate peaks to 9% was observed, indicating a 91% conversion of the acrylate groups. Polymer (A.1) was obtained. K-value (1% by weight in water): 15.5, GPC: $M_n$ = 8190 g/mol, $M_w$ = 13800 g/mol, $M_w/M_n$ = 1.7, Hazen color (ISO 6271:2015): 62.

I.2 Synthesis of polymer (A.2)

A four-neck-round-bottom flask with stirrer and dropping funnel was charged with a solution of 40 g dipropylene glycol diacrylate (β.1) (80%, 0.20 mol) in 40 g isopropanol. A mixture of 40 g water and 12.2 g ethanolamine (α.2) (0.2 mol) was added slowly to the reaction mixture, stirred at 50°C for 6 h, and then cooled down to ambient temperature. In $^1$H-NMR reduction of the intensity of the acrylate peaks to 15% was observed, indicating a conversion of 85% of the acrylate groups. Polymer (A.2) was obtained K-value (water): 14.0, GPC: $M_n$ = 5520 g/mol, $M_w$ = 13900 g/mol, $M_w/M_n$ = 2.5.

I.3 Synthesis of polymer (A.3)

A four-neck-round-bottom flask with stirrer and dropping funnel was charged with a solution of 100.95 g dipropylene glycol-diacrylate (β.1) (80%, 0.3337 mol) in 70 g isopropanol. A mixture of 70 g of water, 3-(dimethylamino)-1-propylamine (α.1) (1.67 mol) and 20.86 g 1-(3-aminopropyl)imidazole (α.2) (0.1670 mol) was added slowly. The pH value was adjusted to ~9 with NaOH. The resultant reaction mixture was stirred at 90°C for 5 hours and then cooled down to ambient temperature. Polymer (A.3) was obtained. In $^1$H-NMR a conversion ~95% of the acrylate groups was observed. K-value (water): 13.9, GPC: $M_n$ = 3970 g/mol, $M_w$ = 13700 g/mol, ($M_w/M_n$) = 3.5, Hazen color (ISO 6271:2015): 100.

I.4 Synthesis of polymer (A.4)

A four-neck-round-bottom flask with stirrer and dropping funnel was charged with a solution of 300.36 g ethyl acrylate (γ1.1) (3.0 mol) in 350 g isopropanol. A mixture of 350 g water and 153.27 g 3-(dimethylamino)-1-propylamine (α.1) (1.503 mol) was added slowly, stirred at 50°C for 4 hours, and then cooled down to ambient temperature. In $^1$H-NMR spectra of the resultant intermediate, a conversion of 95% of the acrylate groups was observed. Solvents were removed under reduced pressure. An intermediate was obtained. A 500 ml three-neck round bottom flask with stirrer, thermometer and distillation bridge was charged with 151.21 g intermediate. Then, 38 g 1,3-propanediol (γ2.1) (0.5 mol) and sodium methylate (30% in methanol) were added and the mixture was stirred at 100°C for 7h. Ethanol was distilled off during the reaction. Polymer (A.4) was obtained. K- value (water): 15.2, GPC: $M_n$ = 3380 g/mol, $M_w$ = 5000 g/mol, *Đ* ($M_w/M_n$) = 1.5.

II. Washing performance

II.1 Laundry cleaning

The primary wash performance of inventive polymers was tested in the washing machine preparing wash solutions using water of 14°dH hardness (2.5 mmol/L; Ca:Mg:$HCO_3$ 4:1:8) containing 3.0 g/L of the liquid test detergent L.1, see composition in Table 2.1 or 2.2, and 2.0% of a polymer (A).

Table 2.1: Ingredients of base mixture L.1 for a liquid detergent formulation

| ingredient | % by weight |
|---|---|
| Alkylbenzene sulfonic acid ($C_{10}$-$C_{13}$), Na salt | 5.5 |
| $C_{13}/C_{15}$-Oxoalkohol reacted with 7 moles of EO | 5.4 |
| 1,2 propylene glycol | 6 |
| ethanol | 2 |

(continued)

| ingredient | % by weight |
|---|---|
| potassium coconut soap | 2.4 |
| Monoethanolamine | 2.5 |
| lauryl ether sulphate (B.1) | 5.4 |
| Sodium citrate | 3 |
| (D.1) - structure see below | 2 |
| Polymer (A) | 2 |
| Water | to 100 |

Table 2.2: Ingredients of base mixture L.2 for a liquid detergent formulation

| ingredient | % by weight |
|---|---|
| MGDA-$Na_3$ | 5.5 |
| Branched $C_{13}$-Polyglucoside | 3.5 |
| 1,2 propylene glycol | 6 |
| ethanol | 2 |
| potassium coconut soap | 4.4 |
| NaOH | 2.2 |
| lauryl ether sulphate (B.1) | 9.5 |
| Sodium citrate | 3 |
| Polymer (A) | 2 |
| Water | to 100 |

(D.1):

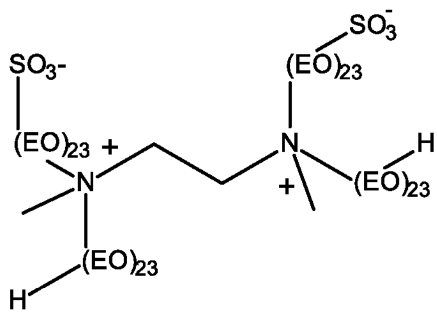

(D.1)

Polymers (A) were added to a laundry liquor comprising either a liquid model composition L.1 or L.2, respectively, without polymer (additive dosage of 3% on weight of liquid model detergent (owod)) together with commercially obtained stained fabrics (from Center of Test Materials CFT Vlaardingen. P-H108: Clay, Ground soil, P-H115: Standard Clay; P-H144: Red Pottery Clay; P-H145: tennis Court Clay) and 5 g of commercially available soil ballast sheet wfk SBL 2004 (from wfk Testgewebe GmbH Brueggen). Washing conditions were 3 g/L detergent, liquor 250 mL, 30 min, 40°C, 4-fold determination. After wash the fabrics were rinsed and dried. The fabrics were instrumentally assessed before and after wash using the MACH5 multi area color measurement instrument from ColourConsult which gives Lab readings. From these Lab readings, ΔE values were calculated between unwashed and washed stain. The higher the ΔE value, the better is the performance. To better judge on the pure cleaning effect of the respective polymer sample itself, the obtained values were further expressed in ΔΔE values vs reference without polymer (baseline correction for plain wash effect of detergent only). Again, the higher the values of ΔΔE are observed the better is the performance, respectively.

The total level of cleaning was evaluated using color measurements. Reflectance values of the stains on the

monitors were measured using a sphere reflectance spectrometer (SF 500 type from Datacolor, USA, wavelength range 360-700nm, optical geometry d/8°) with a UV cutoff filter at 460 nm. In this case, with the aid of the CIE-Lab color space classification, the brightness L *, the value a * on the red - green color axis and the b * value on the yellow - blue color axis, were measured before and after washing and averaged for the respective stains of the monitor. The change of the color value (Delta E, ΔE) value, defined and calculated automatically by the evaluation color tools on the following formula,

$$\Delta E^{*}_{ab} = \sqrt{\Delta L^{*2} + \Delta a^{*2} + \Delta b^{*2}}$$

is a measure of the achieved cleaning effect. All experiments were repeated three times to provide a representative average number. The ΔΔE values and ΔΔL values of the formulations for the 4 stains are listed in Tables 3.1 and 3.2.

Table 3.1: Results of small-scale primary detergency (Linitest) primary detergency in regular liquid model formulation L.1 on commercially available stains

| Formulation L.1 | ΔΔE (L*a*b) Σ all stains | ΔΔL (Lightness) Σ all stains |
|---|---|---|
| (A) | | |
| (A.1) | 6.67 | 4.85 |
| (A.3) | 8.45 | 6.06 |

Table 3.2: Results of small-scale primary detergency (Linitest) primary detergency in regular liquid model formulation L.2 on commercially available stains

| Formulation L.2 | ΔΔE (L*a*b) Σ all stains | ΔΔL (Lightness) Σ all stains |
|---|---|---|
| (A) | | |
| (A.3) | 6.5 | 4.4 |
| (A.4) | 1.6 | 0.9 |

III. Biodegradation tests

General: the tests were carried out in accordance with the OECD 301F Guidelines. According to the OECD 301F guidelines a test is valid if:

1. The reference reaches 60% within 14 days.
2. The difference of the extremes of the test replicates by the end of the test is less than 20%.
3. Oxygen uptake of inoculum blank is 20 to 30 mg $O_2$/l and must not be greater than 60 mg $O_2$/l.
4. The pH value measured at the end of the test must be between 6 and 8.5.

Description of the test method used in the context of the present invention:
Biodegradation in sewage was tested in triplicate using the OECD 301F manometric respirometry method. OECD 301F is an aerobic test that measures biodegradation of a sewage sample by measuring the consumption of oxygen. To a measured volume of sewage, 100 mg/L test substance, which is the nominal sole source of carbon, was added along with the inoculum (aerated sludge taken from the municipal sewage treatment plant, Mannheim, Germany). This sludge was stirred in a closed flask at a constant temperature (25°C) for 28 days. The consumption of oxygen is determined by measuring the change in pressure in the closed flask using an Oxi TopC. Carbon dioxide evolved was absorbed in a solution of sodium hydroxide. Nitrification inhibitors were added to the flask to prevent consumption of oxygen due to nitrification. The amount of oxygen taken up by the microbial population during biodegradation of the test substance (corrected for uptake by a blank inoculum run in parallel) is expressed as a percentage of ThOD (theoretical oxygen demand, which is measured by the elemental analysis of the compound). A positive control glucose/glutamic acid is run along with the test samples for each cabinet as reference. The results of biodegradability tests are summarized in Table 4.
Calculations: Theoretical oxygen demand: Amount of $O_2$ required to oxidize a compound to its final oxidation products. This amount is calculated using the elemental analysis data.

% Biodegradation: Experimental $O_2$ uptake x 100 and divided by the theoretical oxygen de- mand

Table 4: Summary of biodegradation tests

| sample | Biodegradation [%] |
|---|---|
| (A.1) | 54 |
| (A.2) | 73 |
| (A.3) | 50 |
| (A.4) | 51 |

In each test, the reference had a biodegradability of more than 60%.

## Claims

**1.** Detergent composition or composition for hard surface cleaning comprising

(A) at least one polymer with an average molecular weight $M_w$ of at least 1,500 g/mol comprising, as repeating units, structural units according to general formula (I)

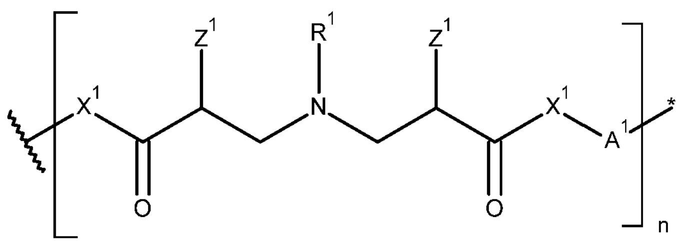

(I)

wherein

$Z^1$ are same or different and selected from hydrogen and methyl,
$R^1$ are same or different and selected from $C_2$-$C_4$-alkyl, non-substituted or substituted with hydroxy or $-NR^{2a}R^{2b}$,
$R^{2a}$ and $R^{2b}$ are same or different and selected from $C_1$-$C_4$-alkyl, or $NR^{2a}R^{2b}$ together form a $C_5$-$C_6$-cycloalkylenamino or a 1-imidazole group,
n is selected from 3 to 100,
$X^1$ is selected from O and N-$R^3$, wherein $R^3$ is selected from hydrogen and methyl, $A^1$ are same or different and selected from $C_2$-$C_6$-alkylene and from $(AO)_{y1}$, with AO being selected from ethylene oxide and propylene oxide and combinations thereof, and y1 being from 2 to 200,

(B) at least one anionic surfactant.

**2.** Composition according to claim 1 wherein polymer (A) additionally bears groups of the structural formula (II)

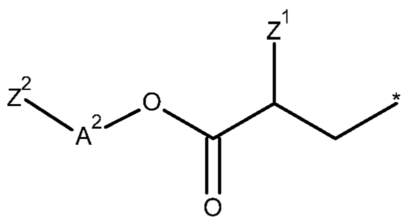

(II)

wherein $A^2$ is selected from $(AO)_{y2}$, wherein AO is selected from ethylene oxide and propylene oxide and

combinations thereof, and y2 being from 2 to 200, and $Z^2$ is selected from hydrogen, $C_1$-$C_{10}$-alkyl, the carboxylate of an aliphatic $C_2$-$C_{20}$-alkyl fatty acid or of a $C_{10}$-$C_{20}$-alkenyl fatty acid, and the asterisk denotes the part that is linked to an N-atom of polymer (A), or (III)

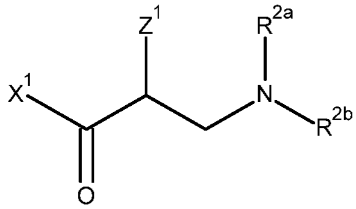

(III)

wherein group (III) is connected through $X^1$ to polymer (A), and the other variables are defined as above.

**3.** Composition according to claim 1 or 2 wherein in $A^1$, all AO are selected from ethylene oxide.

**4.** Composition according to any of the preceding claims wherein polymer (A) has an average molecular weight $M_w$ in the range of from 2,500 to 100,000 g/mol.

**5.** Composition according to any of the preceding claims wherein said composition additionally comprises (C) at least one hydrolase.

**6.** Composition according to claim 5 wherein said hydrolyse (C) is a lipase (C) that is selected from selected from triacylglycerol lipases (EC 3.1.1.3).

**7.** Method of preserving a composition according to any of claims 1 to 6 against microbial contamination or growth, which method comprises addition of 2-phenoxyethanol.

**8.** Method of providing an antimicrobial effect on textiles after treatment with a composition according to any of claims 1 to 6 containing 4,4'-dichloro 2-hydroxydiphenyl ether.

**9.** Use of a composition according to any of claims 1 to 6 for laundry care or hand dishwash detergents.

**Patentansprüche**

**1.** Waschmittelzusammensetzung oder Zusammensetzung für die Reinigung harter Oberflächen, umfassend

(A) mindestens ein Polymer mit einem mittleren Molekulargewicht Mw von mindestens 1.500 g/mol, das als sich wiederholende Einheiten Struktureinheiten nach der allgemeinen Formel (I) umfasst

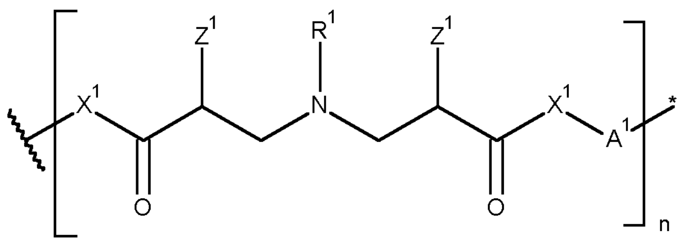

(I)

worin

Z1 gleich oder verschieden sind und aus Wasserstoff und Methyl ausgewählt sind, R1 gleich oder verschieden sind und aus C2-C4-Alkyl ausgewählt sind, unsubstituiert oder mit Hydroxy oder -NR2aR2b

substituiert,
R2a und R2b sind gleich oder verschieden und ausgewählt aus C1-C4-Alkyl oder NR2aR2b bilden zusammen eine C5-C6-Cycloalkylenamino- oder eine 1-Imidazolgruppe ,
n wird von 3 bis 100 ausgewählt,
X1 wird aus O und N-R3 ausgewählt, wobei R3 aus Wasserstoff und Methyl ausgewählt ist,
A1 gleich oder verschieden sind und aus C2-C6-Alkylen und aus $(AO)_{y1}$ ausgewählt sind, wobei AO aus Ethylenoxid und Propylenoxid und Kombinationen davon ausgewählt ist und y1 von 2 bis 200 ist,

(B) mindestens ein anionisches Tensid.

**2.** Zusammensetzung nach Anspruch 1, wobei das Polymer (A) zusätzlich Gruppen der Strukturformel (II) trägt

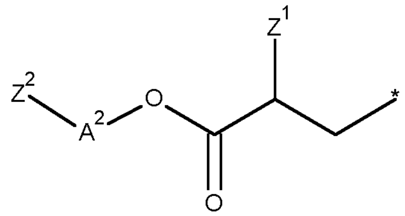

(II)

wobei A2 aus $(AO)_{y2}$ ausgewählt ist, wobei AO aus Ethylenoxid und Propylenoxid und Kombinationen davon ausgewählt ist, und y2 von 2 bis 200 ist,
und Z2 aus Wasserstoff, C1-C10-Alkyl, dem Carboxylat einer aliphatischen C2-C20-Alkylfettsäure oder einer C10-C20-Alkenylfettsäure ausgewählt ist, und das Sternchen bezeichnet den Teil, der an ein N-Atom des Polymers (A) gebunden ist,
oder (III)

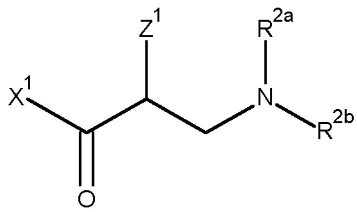

(III)

wobei die Gruppe (III) durch X1 mit dem Polymer (A) verbunden ist,
und die anderen Variablen sind wie oben definiert.

**3.** Zusammensetzung nach Anspruch 1 oder 2, wobei in A1 alle AO aus Ethylenoxid ausgewählt sind.

**4.** Zusammensetzung nach einem der vorhergehenden Ansprüche, wobei das Polymer (A) ein mittleres Molekulargewicht Mw im Bereich von 2.500 bis 100.000 g/mol aufweist.

**5.** Zusammensetzung nach einem der vorhergehenden Ansprüche, wobei die Zusammensetzung zusätzlich
(C) mindestens eine Hydrolase.

**6.** Zusammensetzung nach Anspruch 5, wobei die Hydrolyse (C) eine Lipase (C) ist, die aus ausgewählten Triacylglycerin-Lipasen (EC 3.1.1.3) ausgewählt ist.

**7.** Verfahren zur Konservierung einer Zusammensetzung nach einem der Ansprüche 1 bis 6 gegen mikrobielle Kontamination oder Wachstum, wobei das Verfahren die Zugabe von 2-Phenoxyethanol umfasst.

**8.** Verfahren zur Erzielung einer antimikrobiellen Wirkung auf Textilien nach Behandlung mit einer Zusammensetzung nach einem der Ansprüche 1 bis 6, die 4,4'-Dichlor-2-hydroxydiphenylether enthält.

**9.** Verwendung einer Zusammensetzung nach einem der Ansprüche 1 bis 6 für die Wäschepflege oder Handgeschirrspülmittel.

## Revendications

**1.** Composition détergente ou composition pour le nettoyage de surfaces dures comprenant

(A) au moins un polymère d'un poids moléculaire moyen Mw d'au moins 1 500 g/mol comportant, en tant qu'unités répétitives, des unités structurelles selon la formule générale (I)

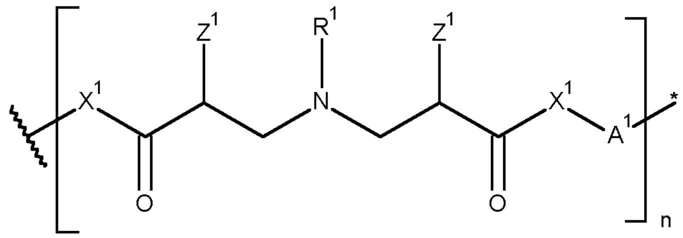

(I)

Où

Z1 sont identiques ou différents et choisis parmi l'hydrogène et le méthyle,
R1 sont identiques ou différents et choisis parmi les alkyles en C2-C4, non substitués ou substitués par hydroxy ou -NR2aR2b,
R2a et R2b sont identiques ou différents et choisis parmi les alkyles en C1-C4 ou NR2aR2b forment ensemble un groupe cycloalkylénamino en C5-C6 ou un groupe 1-imidazole,
n est sélectionné de 3 à 100,
X1 est choisi parmi O et N-R3, tandis que R3 est choisi parmi l'hydrogène et le méthyle,
A1 sont identiques ou différents et choisis parmi l'alkylène en C2-C6 et $(AO)_{y1}$, AO étant choisi parmi l'oxyde d'éthylène et l'oxyde de propylène et leurs combinaisons, et y1 étant compris entre 2 et 200,

(B) au moins un tensioactif anionique.

**2.** Composition selon la revendication 1, dans laquelle le polymère (A) porte en outre des groupes de la formule structurelle (II)

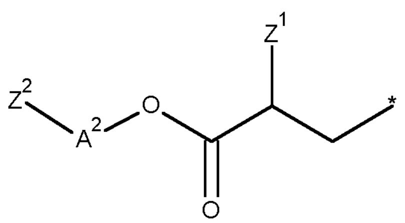

(II)

où A2 est choisi parmi $(AO)_{y2}$, où AO est choisi parmi l'oxyde d'éthylène et l'oxyde de propylène et leurs combinaisons, et y2 étant compris entre 2 et 200,
et Z2 est choisi parmi l'hydrogène, l'alkyle en C1-C10, le carboxylate d'un acide gras alkyle aliphatique en C2-C20 ou d'un acide gras alcényle en C10-C20, et l'astérisque désigne la partie liée à un atome N de polymère (A), ou (III)

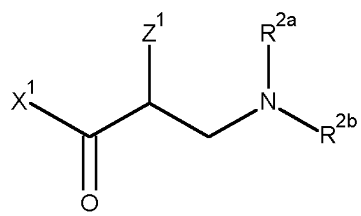

(III)

dans lequel le groupe (III) est relié par X1 au polymère (A),

et les autres variables sont définies comme ci-dessus.

**3.** Composition selon la revendication 1 ou 2, dans laquelle dans A1, tous les AO sont choisis à partir de l'oxyde d'éthylène.

**4.** Composition selon l'une quelconque des revendications précédentes, dans laquelle le polymère (A) a un poids moléculaire moyen Mw compris entre 2 500 et 100 000 g/mol.

**5.** Composition selon l'une quelconque des revendications précédentes, dans laquelle ladite composition comprend en outre
(C) au moins une hydrolase.

**6.** Composition selon la revendication 5, dans laquelle ladite hydrolyse (C) est une lipase (C) qui est sélectionnée parmi les triacylglycérol lipases (EC 3.1.1.3).

**7.** Procédé de conservation d' une composition selon l'une quelconque des revendications 1 à 6 contre la contamination ou la croissance microbienne, lequel procédé comprend l'addition de 2-phénoxyéthanol.

**8.** Procédé pour produire un effet antimicrobien sur des textiles après traitement avec une composition selon l'une quelconque des revendications 1 à 6 contenant du 4,4'-dichloro 2-hydroxydiphényléther.

**9.** Utilisation d'une composition selon l'une quelconque des revendications 1 à 6 pour l'entretien du linge ou les détergents pour lave-vaisselle à la main.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015091160 A
- EP 3266858 A1
- EP 3226858 A1
- US 5470510 A
- US 5869438 A
- EP 283075 A2
- WO 8906279 A
- WO 9102792 A
- WO 9523221 A
- DE 10064983
- WO 2003054184 A
- WO 2003056017 A
- WO 2003055974 A
- WO 2005063974 A
- WO 2005103244 A
- DE 102005028295
- WO 9219729 A
- WO 9634946 A
- WO 9820115 A
- WO 9820116 A
- WO 9911768 A
- WO 0144452 A
- WO 02088340 A
- WO 03006602 A
- WO 200403186 A
- WO 2004041979 A
- WO 2007006305 A
- WO 2011036263 A
- WO 2011036264 A
- WO 2011072099 A
- EP 1921147 A
- EP 0851023 A
- DE 19819187 A


### Non-patent literature cited in the description


- **NEEDLEMAN** ; **WUNSCH**. *J. Mol. Biol.*, 1979, vol. 48, 443-453
- **GUPTA et al.** *Biotechnol. Appl. Biochem.*, 2003, vol. 37, 63-71
- **GUPTA et al.** *Appl. Microbiol. Biotechnol.*, 2002, vol. 60, 381-395
- **DELMAR et al.** *Analytical Biochem*, 1979, vol. 99, 316-320
- **VASANTHA et al.** *J. Bacteriol.*, 1984, vol. 159, 811-819
- **JA WELLS et al.** *Nucleic Acids Research*, 1983, vol. 11, 7911-7925
- **EL SMITH et al.** *J. Biol Chem*, 1968, vol. 243, 2184-2191
- **JACOBS et al.** *Nucl. Acids Res*, 1985, vol. 13, 8913-8926
- *CHEMICAL ABSTRACTS*, 3380-30-1
- *CHEMICAL ABSTRACTS*, 122-99-6
- *CHEMICAL ABSTRACTS*, 52-51-7
- *CHEMICAL ABSTRACTS*, 111-30-8
- *CHEMICAL ABSTRACTS*, 107-22-2
- *CHEMICAL ABSTRACTS*, 4299-07-4
- *CHEMICAL ABSTRACTS*, 2682-20-4
- *CHEMICAL ABSTRACTS*, 26530-20-1
- *CHEMICAL ABSTRACTS*, 26172-55-4
- *CHEMICAL ABSTRACTS*, 55965-84-9
- *CHEMICAL ABSTRACTS*, 2634-33-5
- *CHEMICAL ABSTRACTS*, 110-44-1
- *CHEMICAL ABSTRACTS*, 24634-61-5
- *CHEMICAL ABSTRACTS*, 79-33-4
- *CHEMICAL ABSTRACTS*, 65-85-0
- *CHEMICAL ABSTRACTS*, 532-32-1
- *CHEMICAL ABSTRACTS*, 8001-54-5
- *CHEMICAL ABSTRACTS*, 63449-41-2
- *CHEMICAL ABSTRACTS*, 91080-29-4
- *CHEMICAL ABSTRACTS*, 68989-01-5
- *CHEMICAL ABSTRACTS*, 68424-85-1
- *CHEMICAL ABSTRACTS*, 68391-01-5
- *CHEMICAL ABSTRACTS*, 61789-y71-7
- *CHEMICAL ABSTRACTS*, 85409-22-9
- *CHEMICAL ABSTRACTS*, 68424-95-3
- *CHEMICAL ABSTRACTS*, 7173-51-5
- *CHEMICAL ABSTRACTS*, 2372-82-9
- *CHEMICAL ABSTRACTS*, 79-21-0
- *CHEMICAL ABSTRACTS*, 7722-84-1